# EUROPEAN PATENT APPLICATION

(11) **EP 4 607 410 A1**
(43) Date of publication of application: **27.08.2025**
(21) Application number: 23884233.0
(22) Date of filing: 28.06.2023
(51) Int. Cl.: G06N 3/0464

(54) **MODEL TRAINING METHOD AND RELATED DEVICE**

(30) Priority: 31.10.2022 CN 202211366482
(71) Applicant: Huawei Technologies Co., Ltd., Shenzhen, Guangdong 518129 (CN)
(72) Inventor: TANG, Yehui, Shenzhen, Guangdong 518129 (CN); DING, Ning, Beijing 100871 (CN); HAN, Kai, Shenzhen, Guangdong 518129 (CN); XU, Chao, Beijing 100871 (CN); WANG, Yunhe, Shenzhen, Guangdong 518129 (CN)
(74) Representative: Pfenning, Meinig & Partner mbB
(86) International application number: PCT/CN2023/103347
(87) International publication number: WO 2024/093294

(57) **Abstract**

Embodiments of this application disclose a model training method and a related device, to perform accelerated training on a target model. In this application, sampling is performed on the target model to obtain a submodel of the target model, and a quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model. In this case, training efficiency of training the submodel may be higher than that of training the target model. The submodel is augmented, and an augmented model is trained to obtain a trained augmented model, so that performance of the trained model can be ensured. Therefore, the technical solutions of this application improve training efficiency while ensuring model performance.

## Description

This application claims priority to Chinese Patent Application No. 202211366482.3, filed with the China National Intellectual Property Administration on October 31, 2022 and entitled "MODEL TRAINING METHOD AND RELATED DEVICE", which is incorporated herein by reference in its entirety.

### TECHNICAL FIELD

This application relates to the field of artificial intelligence, and in particular, to a model training method and a related device, to accelerate model training.

### BACKGROUND

A deep neural network (convolutional neural network, CNN) has been widely used and achieved great success in tasks such as computer vision (image classification, target detection, and image super-resolution) and natural language processing. However, as the deep neural network becomes increasingly larger, computing resources and costs for training also increase sharply. For example, one training of a general pre-trained transformer-3 (general pre-trained transformer-3, GPT-3) costs $4.6 million. In view of this, it is very important to design a general algorithm to reduce model training complexity.

In a mainstream scenario of a computing platform for artificial intelligence (artificial intelligence, AI) model training, a hardware affinity-based accelerated training method can improve market competitiveness of a product. Currently, a neural network acceleration method for removing computational redundancy can automatically identify a redundant parameter in the model, and selectively update the parameter in a training process, thereby greatly reducing a computation workload and achieving good acceleration effect.

However, existing acceleration methods for removing computational redundancy in the industry are mainly implemented by setting some parameters or features to 0. This is a highly unstructured operation. Although the methods have a high theoretical acceleration rate, the methods are not hardware-friendly and are difficult to implement actual acceleration on platforms such as a general-purpose graphics processing unit (graphics processing unit, GPU).

### SUMMARY

Embodiments of this application provide a model training method and a related device, to perform accelerated training on a target model.

A first aspect of this application provides a model training method. First, a target model is obtained, where the target model is a neural network with a plurality of feature transformation layers, and each of the plurality of feature transformation layers corresponds to one weight matrix. Then, sampling is performed on the target model to obtain a submodel of the target model. A quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model. Next, the submodel is trained to obtain a trained submodel, and the trained submodel is augmented to obtain an augmented model, where a quantity of layers of the augmented model is greater than a quantity of layers of the trained submodel, and/or a weight matrix of at least one of a plurality of feature transformation layers of the augmented model is obtained by augmenting a weight matrix of a corresponding feature transformation layer of the trained submodel. Finally, the augmented model is trained to obtain a trained augmented model.

In this application, sampling is performed on the target model to obtain the submodel of the target model, the quantity of feature transformation layers of the submodel is less than the quantity of feature transformation layers of the target model, and/or the size of the weight matrix of at least one of the feature transformation layers of the submodel is less than the size of the weight matrix of the corresponding feature transformation layer of the target model. In this case, training efficiency of training the submodel may be higher than that of training the target model. Because the submodel is augmented, the augmented model is trained to obtain the trained augmented model, so that performance of the trained model can be ensured. Therefore, the technical solutions of this application improve training efficiency while ensuring model performance.

In some feasible implementations, after the training the augmented model to obtain a trained augmented model, the method further includes: S1. setting i=1, where the trained augmented model is a model i; S2. if a quantity of feature transformation layers of the model i is not greater than the quantity of feature transformation layers of the target model, and/or a size of a weight matrix of at least one of a plurality of feature transformation layers of the model i is less than a size of a weight matrix of a corresponding feature transformation layer of the target model, augmenting the model i to obtain an augmented model i, where the quantity of layers of the augmented model is greater than that of the model i, and/or a weight matrix of at least one of feature transformation layers of the augmented model is obtained by augmenting a weight matrix of a corresponding feature transformation layer of the model i; and S3. training the augmented model i to obtain a model i+1, setting i=i+1, and performing step S2. S2 and S3 are repeated, so that the submodel can be gradually augmented to a same size as the target model. In this case, performance of the trained model is close to that of the target model.

In some possible implementations, the method further includes:
if the quantity of feature transformation layers of the model i is equal to the quantity of feature transformation layers of the target model, and a size of a weight matrix of each of the plurality of feature transformation layers of the model i is equal to a size of a weight matrix of a corresponding feature transformation layer of the target model, deploying the model i+1 in a target device, so that the trained model can be used on in target device.

In some feasible implementations, when a weight matrix j corresponding to a j^{th} feature transformation layer of the augmented model is a weight submatrix of a corresponding feature transformation layer of the trained submodel, at least one row of augmented weight vectors and/or at least one column of augmented weight vectors are augmented, so that a width of the submodel is gradually augmented to be a same width as the target model.

In some feasible implementations, the at least one row of augmented weight vectors are orthogonal to at least one row of weight vectors of the weight matrix j respectively, and/or the at least one column of augmented weight vectors are orthogonal to at least one column of weight vectors of the weight matrix j respectively, so that the augmented model has good performance.

In some feasible implementations, the performing sampling on the target model to obtain a submodel of the target model includes: selecting one or more feature transformation layers from the plurality of feature transformation layers of the target model, to obtain a submodel of the target model, where a probability that any feature transformation layer of the submodel of the target model is selected is a first probability; and the augmenting the trained submodel to obtain an augmented model includes: selecting one or more feature transformation layers from the target model, to obtain the augmented model, where a probability that any feature transformation layer of the augmented model is selected is a second probability, and the second probability is higher than the first probability, so that a quantity of feature transformation layers selected from the target model gradually increases, that is, a quantity of feature transformation layers of the augmented model is greater than the quantity of feature transformation layers of the submodel.

A second aspect of this application provides a model training device, where the model training device is configured to perform the method according to any implementation of the first aspect.

A third aspect of this application provides a computer-readable storage medium. The computer-readable storage medium stores instructions. When the instructions are run on a computer, the computer is enabled to perform the method according to any implementation of the first aspect.

A fourth aspect of this application provides a computer program product. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, to enable the device to implement the method according to the first aspect or any one of the possible implementations of the first aspect.

A fifth aspect of this application provides a communication apparatus. The communication apparatus may include at least one processor, a memory, and a communication interface. The at least one processor is coupled to the memory and the communication interface. The memory is configured to store instructions, the at least one processor is configured to execute the instructions, and the communication interface is configured to communicate with another communication apparatus under control of the at least one processor. When the instructions are executed by the at least one processor, the at least one processor is enabled to perform the method according to the first aspect or any one of the possible implementations of the first aspect.

A sixth aspect of this application provides a chip system. The chip system includes a processor, configured to support implementation of a function in the first aspect or any one of the possible implementations of the first aspect.

In a possible design, the chip system may further include a memory. The memory is configured to store necessary program instructions and data. The chip system may include a chip, or may include a chip and another discrete component.

For technical effect brought by any one of the second aspect to the sixth aspect or the possible implementations of the second aspect to the sixth aspect, refer to technical effect brought by the first aspect or the different possible implementations of the first aspect. Details are not described herein again.

### BRIEF DESCRIPTION OF DRAWINGS

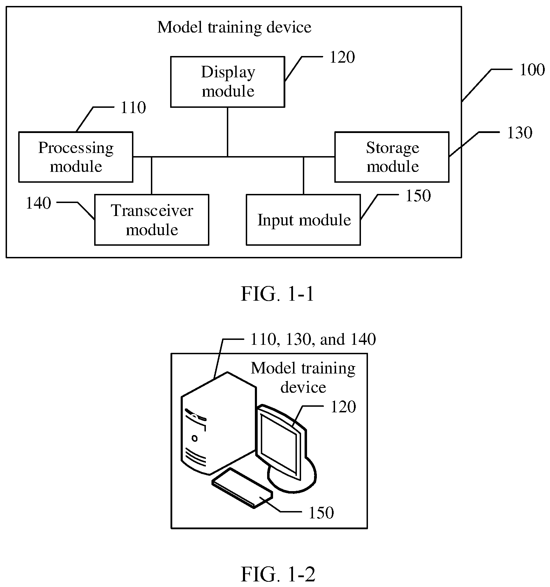

FIG. 1-1 is a diagram of a structure of composition of a model training device according to an embodiment of this application;
FIG. 1-2 is another diagram of a structure of composition of a model training device according to an embodiment of this application;
FIG. 2-1 is a schematic flowchart of a model training method according to an embodiment of this application;
FIG. 2-2 is a diagram of augmenting a weight matrix of a feature transformation layer according to this application;

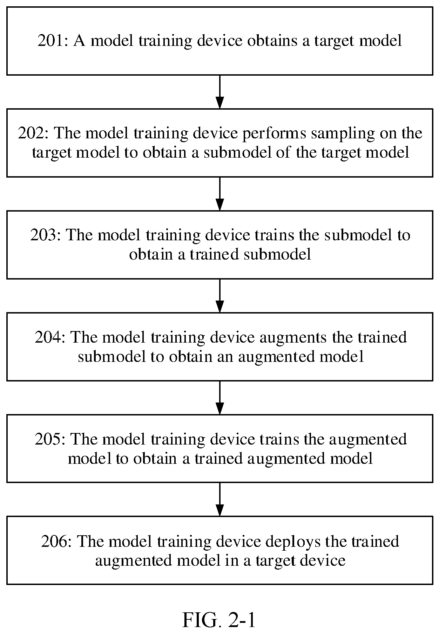

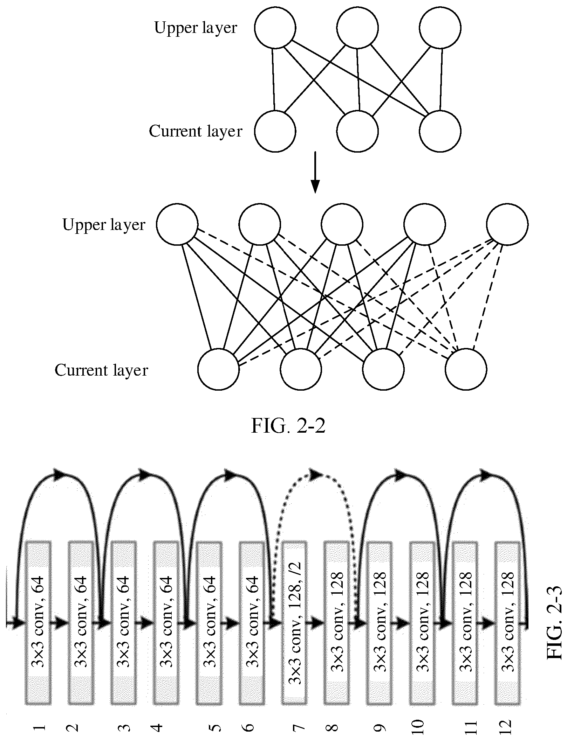

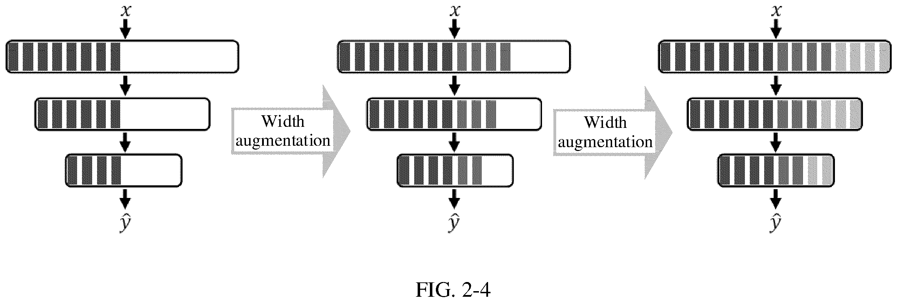

FIG. 2-3 is a diagram of augmenting a quantity of feature transformation layers according to this application;
FIG. 2-4 is a diagram of augmenting a width of a feature transformation layer according to this application;

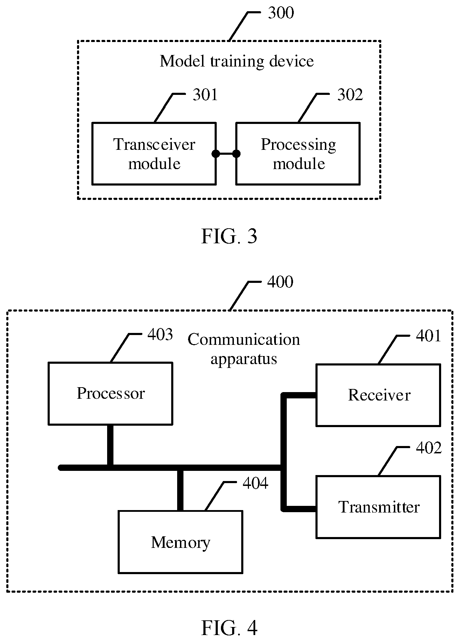

FIG. 3 is a diagram of a structure of a model training device according to an embodiment of this application; and
FIG. 4 is a diagram of a structure of a communication apparatus according to an embodiment of this application.

### DESCRIPTION OF EMBODIMENTS

Embodiments of this application provide a model training method and a related device, to perform accelerated training on a target model.

The following describes embodiments of this application with reference to the accompanying drawings.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Embodiments of this application may be applied to a model training device 100 shown in FIG. 1-1. The model training device 100 includes a processing module 110, a display module 120, a storage module 130, a transceiver module 140, and an input module 150 (for example, a keyboard, a mouse, or a touchscreen, which is not limited herein).

The processing module 110 is a control center of the model training device 100, and connects to various parts of the model training device 100 through various interfaces and lines. The processing module 110 performs various functions of the model training device 100 and data processing by running or executing a software program and/or a module stored in the storage module 130 and invoking data stored in the storage module 130, so as to perform overall monitoring on the model training device 100. Optionally, the processing module 110 may include one or more processing units. Preferably, the processing module 110 may integrate an application processor and a modem processor. The application processor mainly processes an operating system, a user interface, an application program, and the like. The modem processor mainly processes wireless communication. It may be understood that the modem processor may alternatively not be integrated into the processing module 110.

In some feasible implementations, the processing module 110 may alternatively be on a general-purpose computing platform, for example, a GPU or an embedded neural network processor (neural processing unit, NPU), to reduce training costs of the neural network.

The display module 120 may be configured to display information input by a user or information provided for the user, and various interfaces of the model training device 100. The display module 120 may include a display panel. Optionally, the display panel may be configured in a form of liquid crystal display (Liquid Crystal Display, LCD), organic light-emitting diode (Organic Light-Emitting Diode, OLED), or the like. Further, a touch panel may cover the display panel. When detecting a touch operation on or near the touch panel, the touch panel transmits the touch operation to the processing module 110 to determine a type of a touch event, and then the processing module 110 provides a corresponding visual output on the display panel based on the type of the touch event.

The storage module 130 may include a read-only memory and a random access memory, and provide instructions and data for the processing module 110. A part of the storage module 130 may further include a non-volatile random access memory (non-volatile random access memory, NVRAM). The storage module 130 stores a processor and an operation instruction, an executable module, a data structure, or a subset thereof, or an extended set thereof. The operation instruction may include various operation instructions used to implement various operations.

The transceiver module 140 may be configured to: receive input digit or character information, and generate a signal input related to a related setting and function control of the model training device 100. The transceiver module 140 may be configured to output digit or character information through a first interface. The transceiver module 140 may be further configured to send instructions to a disk group through the first interface, to modify data in the disk group. The transceiver module 140 may further include a display device, for example, a display.

The input module 150 may be configured to: receive input digit or character information, and generate a key signal input related to a user setting and function control of the model training device 100. Specifically, the input module 150 may include a touch panel and another input device. The touch panel, also referred to as a touchscreen, may collect a touch operation (for example, an operation performed by the user on the touch panel or near the touch panel by using any proper object or accessory, such as a finger or a stylus) of the user on or near the touch panel, and drives a corresponding connection apparatus according to a preset program. Optionally, the touch panel may include two parts: a touch detection apparatus and a touch controller. The touch detection apparatus detects a touch position of the user, detects a signal brought by a touch operation, and transfers the signal to the touch controller. The touch controller receives touch information from the touch detection apparatus, converts the touch information into touch point coordinates, and sends the touch point coordinates to the processing module 110, and can receive and execute a command sent by the processing module 110. In addition, the touch panel may be implemented in a plurality of types, such as a resistive type, a capacitive type, infrared, and a surface acoustic wave. In addition to the touch panel, the input module 150 may include the another input device. Specifically, the another input device may include but is not limited to one or more of a physical keyboard, a function key (such as a volume control key and a switch key), a trackball, a mouse, a joystick, and so on.

In some possible implementations, the model training device 100 may be a terminal device or a server. This is not limited herein.

In this embodiment, the server may be an independent physical server, a server cluster or a distributed system that includes a plurality of physical servers, or a cloud server that provides basic cloud computing services such as a cloud service, a cloud database, cloud computing, a cloud function, cloud storage, a network service, cloud communication, a middleware service, a domain name service, a security service, a CDN, big data, and an artificial intelligence platform. The terminal may be a smartphone, a tablet computer, a notebook computer, a desktop computer, a smart speaker, a smartwatch, or the like, but is not limited thereto. The terminal and the server may be directly connected in a wired manner or indirectly connected in a wireless communication manner. The terminal and the server may be connected to form a blockchain network. This is not limited herein in this application.

The terminal device may be user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in embodiments of this application.

For example, the model training device 100 is a home computer (terminal device). As shown in FIG. 1-2, the display module 120 of the model training device 100 may be a display, the input module 150 may be a keyboard and/or a mouse, and the processing module 110, the storage module 130, and the transceiver module 140 may be integrated into a host of the home computer.

It should be noted that FIG. 1-1 and FIG. 1-2 may be used as infrastructure to provide computing capability support for an artificial intelligence system, to communicate with the external world and support communication through a basic platform. A sensor is used to communicate with the outside. A computing capability is provided by the processing module 110 (an intelligent chip, for example, a CPU, an NPU, a GPU, an ASIC, an FPGA, or a hardware acceleration chip). The basic platform includes related platforms such as a distributed computing framework and a network for assurance and support, and may include cloud storage and computing, an interconnection network, and the like. For example, the sensor communicates with the outside to obtain data, and the data is provided for a smart chip in a distributed computing system provided by the basic platform for computing.

A deep neural network (convolutional neural network, CNN) has been widely used and achieved great success in tasks such as computer vision (image classification, target detection, and image super-resolution) and natural language processing. However, as the deep neural network becomes increasingly larger, computing resources and costs for training the deep neural network increase sharply. For example, one training of a general pre-trained transformer-3 (general pre-trained transformer-3, GPT-3) costs $4.6 million. In view of this, it is very important to design a general algorithm to reduce model training complexity.

In a mainstream scenario of a computing platform for artificial intelligence (artificial intelligence, AI) model training, a hardware affinity-based accelerated training method can improve market competitiveness of a product. Currently, a neural network acceleration method for removing computational redundancy can automatically identify a redundant parameter in the model, and selectively update the parameter in a training process, thereby greatly reducing a computation workload and achieving good acceleration effect.

However, existing acceleration methods for removing computational redundancy in the industry are mainly implemented by setting some parameters or features to 0. This is a highly unstructured operation. Although the methods have a high theoretical acceleration rate, the methods are not hardware-friendly and are difficult to implement actual acceleration on platforms such as a general-purpose graphics processing unit (graphics processing unit, GPU).

In view of this, a first aspect of this application provides a model training method. First, a target model is obtained, where the target model is a neural network with a plurality of feature transformation layers, and each of the plurality of feature transformation layers corresponds to one weight matrix. Then, sampling is performed on the target model to obtain a submodel of the target model. A quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model. Next, the submodel is trained to obtain a trained submodel, and the trained submodel is augmented to obtain an augmented model, where a quantity of layers of the augmented model is greater than a quantity of layers of the trained submodel, and/or a weight matrix of at least one of a plurality of feature transformation layers of the augmented model is obtained by augmenting a weight matrix of a corresponding feature transformation layer of the trained submodel. Finally, the augmented model is trained to obtain a trained augmented model.

In this application, sampling is performed on the target model to obtain the submodel of the target model, the quantity of feature transformation layers of the submodel is less than the quantity of feature transformation layers of the target model, and/or the size of the weight matrix of at least one of the feature transformation layers of the submodel is less than the size of the weight matrix of the corresponding feature transformation layer of the target model. In this case, training efficiency of training the submodel may be higher than that of training the target model. Because the submodel is augmented, the augmented model is trained to obtain the trained augmented model, so that performance of the trained model can be ensured. Therefore, the technical solutions of this application improve training efficiency while ensuring model performance.

For example, refer to FIG. 2-1. A model training method provided in an embodiment of this application mainly includes the following steps.

201: A model training device obtains a target model.

In this embodiment of this application, the target model is a neural network with a plurality of feature transformation layers, and each of the plurality of feature transformation layers corresponds to one weight matrix.

In this embodiment of this application, the target model may be an AI-based neural learning model, and the target model may include a plurality of feature transformation layers, including an input layer, a plurality of convolutional layers, a fully connected layer, and an output layer that are sequentially connected. This is not limited herein. Each layer of the target model may include a plurality of nodes, and each node is provided with one weight vector. The weight vector is used to receive data of nodes at an upper layer, perform an operation on the data, and transmit an output result to nodes at a lower layer. In this case, weight vectors of nodes at one layer may form one weight matrix, and the plurality of layers of the target model may correspond to a plurality of weight matrices respectively. In a process of training the target model, the weight matrices of the layers are updated, to obtain a trained target model.

For example, the target model includes one input layer, 12 convolutional layers, one fully connected layer, and one input layer. The 12 convolutional layers are convolutional layers 1 to 12 that are sequentially connected. For example, it is set that a convolutional layer L (L=2, 3, ..., 12) has m nodes, and weight vectors corresponding to the nodes are (w1, w2, ..., wm). It is set that a convolutional layer L-1 has n nodes, and weight vectors corresponding to the nodes are (y1, y2, ..., yn). In this case, the convolutional layer L corresponds to an (m×n)-order weight matrix. In some feasible implementations, the (m×n)-order weight matrix may represent the convolutional layer L.

202: The model training device performs sampling on the target model to obtain a submodel of the target model.

In this embodiment of this application, a quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model.

For example, the convolutional layer L corresponds to an (m×n)-order weight matrix, and m1 rows and n1 columns (m1 is less than m, and n1 is less than n) may be selected from the (m×n)-order weight matrix to obtain a submatrix. For example, if m=10 and n=5, it is set that m1=5 and n1=3. Five (m1) rows are selected from 10 (m) rows, and three (n1) columns are selected from five (n) columns, to obtain the submatrix of the convolutional layer L. In some feasible implementations, a submatrix of a weight matrix of each layer of the target model may be selected to form the submodel of the target model. In some feasible implementations, a row, a column, and a convolutional layer may be manually or randomly selected from the weight matrix. This is not limited herein.

For example, the convolutional layer L corresponds to a (5×4)-order weight matrix, as shown in Table 1.

**Table 1**

| | | | |
|---|---|---|---|
| w11 | w12 | w13 | w14 |
| w21 | w22 | w23 | w24 |
| w31 | w32 | w33 | w34 |
| w41 | w42 | w43 | w44 |
| w51 | w52 | w53 | w54 |

Then, a (3×3)-order submatrix may be extracted from the weight matrix, where second, third, and fifth rows and first, third, and fourth columns are randomly selected (for example, a probability that each layer is selected is 50%), to obtain a submatrix shown in Table 2, namely, a weight matrix of the submodel.

**Table 2**

| | | |
|---|---|---|
| w21 | w23 | w24 |
| w31 | w33 | w34 |
| w51 | w53 | w54 |

203: The model training device trains the submodel to obtain a trained submodel.

In some feasible implementations, the model training device may train the submodel according to a gradient descent method. For example, a loss function is first constructed for the submodel, or a preset loss function is obtained. Then, a sample (including an input sample and an output sample) is input into the submodel, to obtain an output of the submodel, and a sample output is compared with the output of the submodel based on the loss function, to obtain a value of the loss function. Finally, the gradient descent method is applied to the submodel based on the value of the loss function to update a weight matrix of each layer of the submodel, so as to obtain the trained submodel.

For the weight matrix in Table 2, the loss function is calculated once and is calculated again according to the gradient descent method to obtain a new weight matrix. This is referred to as one training. In some possible implementations, the submodel may be trained a specific quantity of times. For example, 120 epochs are required for training ResNet50, and each epoch includes 100 training times.

For example, a submodel corresponding to the weight matrix shown in Table 2 is trained a specific quantity of times, to obtain a trained submodel. A weight matrix of a specific layer of the trained submodel may be shown in Table 3.

**Table 3**

| | | |
|---|---|---|
| w'21 | w'23 | w'24 |
| w'31 | w'33 | w'34 |
| w'51 | w'53 | w'54 |

It should be noted that the sample is data collected to train the target model, and may be a graph, an image, a voice, or a text, or may be internet of things data of a conventional device, including service data of an existing system and perception data such as force, a displacement, a liquid level, a temperature, and humidity. This is not limited herein.

In a process of training the submodel, because the output is expected to be as close as possible to a value that is actually required to be predicted, a predicted value of the current submodel may be compared with a target value that is actually required (the sample output), and the weight matrix of each layer of the submodel is updated based on a difference between the two values (certainly, before first update, there is usually an initialization process, that is, a parameter is preconfigured for each layer). For example, if the predicted value of the submodel is larger, the weight matrix is adjusted to make the predicted value be smaller and adjustment is continuously performed until the submodel can predict the target value that is actually required or a value that is very close to the target value that is actually required. Therefore, "how to obtain, through comparison, the difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

The submodel may correct a value of a parameter in an initial super-resolution model in a training process according to an error backpropagation (backpropagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The backpropagation algorithm is an error-loss-centered backpropagation motion intended to obtain a parameter, such as a weight matrix, of an optimal super-resolution model. In some feasible implementations, the gradient descent method is an implementation of error backpropagation.

204: The model training device augments the trained submodel to obtain an augmented model.

In this embodiment of this application, a quantity of layers of the augmented model is greater than a quantity of layers of the trained submodel, and/or a weight matrix of at least one of a plurality of feature transformation layers of the augmented model is obtained by augmenting a weight matrix of a corresponding feature transformation layer of the trained submodel. Augmentation may include width augmentation and depth augmentation. A width is a size of a weight matrix of each feature transformation layer of the submodel, and a depth is the quantity of feature transformation layers of the submodel.

In some feasible implementations, the model training device may gradually augment the trained submodel by using the following steps until a size of the trained submodel is the same as that of the target model:
S1. setting i=1, where the trained augmented model is a model i;
S2. if a quantity of feature transformation layers of the model i is not greater than the quantity of feature transformation layers of the target model, and/or a size of a weight matrix of at least one of a plurality of feature transformation layers of the model i is less than a size of a weight matrix of a corresponding feature transformation layer of the target model, augmenting the model i to obtain an augmented model i, where the quantity of layers of the augmented model is greater than that of the model i, and/or a weight matrix of at least one of feature transformation layers of the augmented model is obtained by augmenting a weight matrix of a corresponding feature transformation layer of the model i; and
S3. training the augmented model i to obtain a model i+1, setting i=i+1, and performing step S2.

In some feasible implementations, the model training device may first augment a width of the trained submodel or a depth of the trained submodel, or may simultaneously augment a width and a depth of the trained submodel. This is not limited herein. The following separately describes width augmentation and depth augmentation.

### 1. Width augmentation

In this embodiment of this application, augmenting the width of the trained submodel means adding at least one column and/or at least one row to a weight matrix corresponding to each layer of the trained submodel, to obtain an augmented weight matrix.

For example, when a weight matrix j corresponding to a j^{th} feature transformation layer of the augmented model is a weight submatrix of a corresponding feature transformation layer of the trained submodel, at least one row of augmented weight vectors and/or at least one column of augmented weight vectors are augmented.

For example, an (m1×n1)-order weight matrix may be augmented to an (m2×n2)-order weight matrix, where m1<m2≤m and n1<n2≤n, m1≤m2≤m and n1<n2≤n, or m1<m2≤m and n1≤n2≤n.

For example, width augmentation may be performed on the weight matrix (3×3 orders) shown in Table 3 to obtain an augmented model. A weight matrix (3×4 orders) of the augmented model is shown in Table 4.

**Table 4**

| | | | |
|---|---|---|---|
| w'21 | w'23 | w'24 | w'25 |
| w'31 | w'33 | w'34 | w'35 |
| w'51 | w'53 | w'54 | w'55 |

For example, width augmentation may be performed on the weight matrix (3×3 orders) shown in Table 3 to obtain an augmented model. A weight matrix (4×3 orders) of the augmented model is shown in Table 5.

**Table 5**

| | | |
|---|---|---|
| w'21 | w'23 | w'24 |
| w'31 | w'33 | w'34 |
| w'51 | w'53 | w'54 |
| w'61 | w'63 | w'64 |

For example, width augmentation may be performed on the weight matrix (3×3 orders) shown in Table 3 to obtain an augmented model. A weight matrix (5×4 orders) of the augmented model is shown in Table 6.

**Table 6**

| | | | |
|---|---|---|---|
| w'21 | w'23 | w'24 | w'25 |
| w'31 | w'33 | w'34 | w'35 |
| w'51 | w'53 | w'54 | w'55 |
| w'61 | w'63 | w'64 | w'65 |
| w'71 | w'73 | w'74 | w'75 |

In some possible implementations, for each augmentation, a preset quantity of rows and/or columns may be augmented, or a random quantity of rows and/or columns may be augmented. This is not limited herein.

In some possible implementations, for each augmentation, a row may be first augmented and then a column is augmented, or a column may be first augmented and then a row is augmented, or a row and a column may be simultaneously augmented. This is not limited herein. For example, as shown in Table 6, a fourth column is first augmented, a fourth row is augmented on the basis of the fourth column, and a fifth row is augmented on the basis of the fourth row.

In some possible implementations, the weight matrix may be augmented in an orthogonal manner to improve a training convergence rate. For example, a newly augmented row is orthogonal to each row of a weight matrix before augmentation, and/or a newly augmented column is orthogonal to each column of the weight matrix before augmentation.

For example, the at least one row of augmented weight vectors are orthogonal to at least one row of weight vectors of the weight matrix j respectively, and/or the at least one column of augmented weight vectors are orthogonal to at least one column of weight vectors of the weight matrix j respectively.

For example, as shown in Table 4, the newly augmented fourth column is orthogonal to at least one of the first three columns (or orthogonal to each of the first three columns). As shown in Table 5, the newly augmented fourth row is orthogonal to at least one of the first three rows (or orthogonal to each of the first three rows). As shown in Table 6, the newly augmented fourth row is orthogonal to at least one of the first three rows (or orthogonal to each of the first three rows), and/or the newly augmented fifth row is orthogonal to at least one of the first four rows (or orthogonal to each of the first four rows).

In some possible implementations, for obtaining the weight matrix corresponding to the augmented model shown in Table 6, a weight vector of a fourth column may be augmented in a third row and a first column (or orthogonal to at least one or each of the first three columns), then a weight vector of a fourth row is augmented in a first row and a third column (or orthogonal to at least one or each of the first three rows), a weight vector of a fifth row is further augmented in the first row and the third column (or orthogonal to at least one or each of the first three rows, or orthogonal to at least one or each of the first four rows), and finally, w'65 and w'75 may be randomly generated. This is not limited herein.

It should be noted that orthogonality means that a sum of products obtained by multiplying corresponding values in two vectors is equal to 0. There are a plurality of solutions for vectors orthogonal to each other, for example, a singular value decomposition manner. Details are not described herein again.

It should be noted that, when these rows and/or columns are augmented in a weight matrix corresponding to a layer of the trained submodel, it indicates that a weight vector of another node is constructed. For example, in a (3×3)-order weight matrix, as shown in FIG. 2-2, there are three nodes at an upper layer and three nodes at a current layer. When the (3×3)-order weight matrix is augmented to a (5×4)-order weight matrix, it indicates that three nodes at the upper layer are augmented to five nodes, and three nodes at the current layer are augmented to four nodes. Dashed lines in FIG. 2-2 represent a data transmission relationship obtained through augmentation.

### 2. Depth augmentation

In this embodiment of this application, augmenting the depth of the trained submodel means selecting only some layers of the submodel during initial training and gradually increasing a quantity of layers in a subsequent training process.

For example, the model training device may select one or more feature transformation layers from the plurality of feature transformation layers of the target model, to obtain the submodel of the target model, where a probability that any feature transformation layer of the submodel of the target model is selected is a first probability; and select one or more feature transformation layers from the target model, to obtain an augmented model, where a probability that any feature transformation layer of the augmented model is selected is a second probability, and the second probability is higher than the first probability.

For example, the submodel includes an input layer, an output layer, a fully connected layer, and a plurality of convolutional layers. For example, as shown in FIG. 2-3, the target model has 12 convolutional layers (which are convolutional layers 1 to 12 respectively). During initial training, the submodel selects six convolutional layers (which are convolutional layers 1, 2, 5, 6, 11, and 12 respectively). In this case, a quantity of convolutional layers of the submodel may be gradually increased, to achieve an objective of augmenting a depth of the submodel. For example, two convolutional layers may be first added based on the six convolutional layers of the submodel. For example, convolutional layers 3 and 4 are added, so that an augmented model has eight convolutional layers (which are convolutional layers 1, 2, 3, 4, 5, 6, 11, and 12 respectively).

In some feasible implementations, layers of the target model may be classified into a feature transformation layer (an input layer, an output layer, a fully connected layer, and a plurality of convolutional layers) and a skip connection layer. The feature transformation layer is configured to: receive data output by an upper layer, output a result, and send the result to a lower layer as an input of the lower layer. The skip connection layer is configured to skip a feature transformation layer. A feature transformation layer that is skipped does not need to be executed, and feature transformation layers that are not skipped forms a submodel. Therefore, the feature transformation layer consumes a computation workload, and the skip connection layer has no computation workload. In this embodiment of this application, the computation workload is reduced by executing some skip connection layers.

For example, as shown in FIG. 2-3, the target model has six skip connection layers (which are skip connection layers 1 to 6 respectively), and each skip connection layer corresponds to two convolutional layers. The skip connection layer 1 corresponds to convolutional layers 1 and 2, the skip connection layer 2 corresponds to convolutional layers 3 and 4, the skip connection layer 3 corresponds to convolutional layers 5 and 6, the skip connection layer 4 corresponds to convolutional layers 7 and 8, the skip connection layer 5 corresponds to convolutional layers 9 and 10, and the skip connection layer 6 corresponds to convolutional layers 11 and 12. When a skip connection layer is executed, corresponding convolutional layers are not executed. For example, when the skip connection layer 2 is executed, the convolutional layers 3 and 4 are skipped, that is, the convolutional layers 3 and 4 are not executed.

In this embodiment of this application, the depth of the submodel may be augmented by reducing execution of skip connection layers. In some feasible implementations, a preset part of skip connection layers may be first executed, then execution of some skip connection layers is canceled each time, and execution of all skip connection layers is gradually canceled. In some feasible implementations, a probability (for example, 50%) that each skip connection layer is executed may be set, and then the probability is gradually reduced until the probability is reduced to 0%, that is, the depth of the submodel is gradually augmented until a depth of the target model is restored.

For example, as shown in FIG. 2-3, there are the skip connection layers 1 to 6 respectively. During initial training (training in step 202), all skip connection layers are not executed. During second training (training in step 204), each skip connection layer is executed at a probability of 50%. For example, only skip connection layers 2, 5, and 6 are executed, that is, the convolutional layers 1, 2, 5, 6, 7, and 8 are executed. During third training (training in step 204), each skip connection layer is executed at a probability of 33%. For example, the skip connection layers 2 and 5 are executed, that is, the convolutional layers 1, 2, 5, 6, 7, 8, 11, and 12 are executed. During last training (training in step 204), each skip connection layer is executed at a probability of 0%. For example, no skip connection layer is executed, that is, the convolutional layers 1 to 12 are executed. In this way, the depth of the submodel is augmented.

In some feasible implementations, when step 203 is performed once, only the width may be augmented, or only the depth may be augmented, or both the width and the depth may be augmented. This is not limited herein.

In some feasible implementations, each time step 203 is performed, the width and/or the depth may be slightly augmented. After each augmentation, step 204 is performed on an augmented model, to perform training.

For example, as shown in FIG. 2-4, the width of the submodel is gradually augmented, so that the width of the submodel is gradually restored to the width of the target model.

In some feasible implementations, in step 203, if only a width or a depth is augmented, the width may be preferentially augmented until a width of an augmented model is the same as the width of the target model, and then the depth of the submodel is augmented until a depth of an augmented model is the same as a depth of the target model. This is not limited herein.

205: The model training device trains the augmented model to obtain the trained augmented model.

In this embodiment of this application, for a training method for the augmented model, refer to the training method for the submodel in step 202. Details are not described herein again.

If a model obtained by training the augmented model is the same as the target model in depth and width, subsequent step 205 may be performed; or if a model obtained by training the augmented model is different from the target model in depth and width, step 203 is performed, to be specific, the model obtained by training the augmented model is augmented by using the method described in step 203. The trained augmented model is obtained after steps 203 and 204 are performed a plurality of times. If the trained augmented model is the same as a target model in depth and width, the following step 206 is performed.

206: The model training device deploys the trained augmented model in a target device.

In this embodiment of this application, when the trained augmented model is obtained after steps 201 and 202 are performed and steps 203 and 204 are performed a plurality of times, the model training device may deploy the trained augmented model.

In some feasible implementations, based on steps S1 to S3 in step 204, if the quantity of feature transformation layers of the model i is equal to the quantity of feature transformation layers of the target model, and a size of a weight matrix of each of the plurality of feature transformation layers of the model i is equal to the size of the weight matrix of the corresponding feature transformation layer of the target model, the model i+1 is deployed in the target device.

In some feasible implementations, experiments may be performed on a large-scale image classification dataset ImageNet. Experiments show that a standard model ResNet101 of the trained augmented model obtained by using the method in this application can be accelerated by a maximum of 1.42 times.

| Model | Method | Accuracy | Training duration | Acceleration |
|---|---|---|---|---|
| ResNet50 | Method in this application | 76.23% | 19 hours 21 minutes | - |
| | | 75.66% | 15 hours 47 minutes | 1.23 × |
| | | 75.83% | 15 hours 10 minutes | 1.28× |
| ResNet101 | Method in this application | 77.39% | 31 hours 01 minute | - |
| | | 75.64% | 22 hours 39 minutes | 1.37× |
| | | 77.17% | 21 hours 46 minutes | 1.42× |

In conclusion, in this application, the target model is sampled to obtain the submodel, and then the width and the depth of the submodel are gradually augmented in a training process to obtain the trained augmented model, so that model training can be accelerated.

It needs to be noted that, for brief description, the foregoing method embodiments are represented as a series of actions. However, a person skilled in the art should appreciate that this application is not limited to the described sequence of the actions, because according to this application, some steps may be performed in other sequences or simultaneously. It should be further appreciated by a person skilled in the art that embodiments described in this specification all belong to preferred embodiments, and the related actions and modules are not necessarily required by this application.

To better implement the solutions of embodiments of this application, a related apparatus for implementing the solutions is further provided below.

For example, refer to FIG. 3. A model training device 300 provided in an embodiment of this application may include:
a transceiver module 301, configured to obtain a target model, where the target model is a neural network with a plurality of feature transformation layers, and each of the plurality of feature transformation layers corresponds to one weight matrix; and
a processing module 302, configured to perform sampling on the target model to obtain a submodel of the target model, where a quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model;
the processing module 302 is further configured to train the submodel to obtain a trained submodel;
the processing module 302 is further configured to augment the trained submodel to obtain an augmented model, where a quantity of layers of the augmented model is greater than a quantity of layers of the trained submodel, and/or a weight matrix of at least one of a plurality of feature transformation layers of the augmented model is obtained by augmenting a weight matrix of a corresponding feature transformation layer of the trained submodel; and
the processing module 302 is further configured to train the augmented model to obtain a trained augmented model.

In some feasible implementations, the processing module 302 is further configured to:
S1. set i=1, where the trained augmented model is a model i;
S2. if a quantity of feature transformation layers of the model i is not greater than the quantity of feature transformation layers of the target model, and/or a size of a weight matrix of at least one of a plurality of feature transformation layers of the model i is less than a size of a weight matrix of a corresponding feature transformation layer of the target model, augment the model i to obtain an augmented model i, where the quantity of layers of the augmented model is greater than that of the model i, and/or a weight matrix of at least one of feature transformation layers of the augmented model is obtained by augmenting a weight matrix of a corresponding feature transformation layer of the model i; and
S3. train the augmented model i to obtain a model i+1, set i=i+1, and perform step S2.

In some feasible implementations, the processing module 302 is further configured to:
if the quantity of feature transformation layers of the model i is equal to the quantity of feature transformation layers of the target model, and a size of a weight matrix of each of the plurality of feature transformation layers of the model i is equal to a size of a weight matrix of a corresponding feature transformation layer of the target model, deploy the model i+1 in a target device.

In some feasible implementations, when a weight matrix j corresponding to a j^{th} feature transformation layer of the augmented model is a weight submatrix of a corresponding feature transformation layer of the trained submodel, at least one row of augmented weight vectors and/or at least one column of augmented weight vectors are augmented.

In some feasible implementations, the at least one row of augmented weight vectors are orthogonal to at least one row of weight vectors of the weight matrix j respectively, and/or the at least one column of augmented weight vectors are orthogonal to at least one column of weight vectors of the weight matrix j respectively.

In some feasible implementations, the processing module 302 is specifically configured to:
select one or more feature transformation layers from the plurality of feature transformation layers of the target model, to obtain the submodel of the target model, where a probability that any feature transformation layer of the submodel of the target model is selected is a first probability; and
select one or more feature transformation layers from the target model, to obtain the augmented model, where a probability that any feature transformation layer of the augmented model is selected is a second probability, and the second probability is higher than the first probability.

It should be noted that because content such as information exchange between the modules/units of the apparatus and the execution processes thereof is based on a same concept as the method embodiments of this application, technical effect brought is the same as that of the method embodiments of this application. For specific content, refer to the descriptions in the foregoing method embodiments of this application. Details are not described herein again.

An embodiment of this application further provides a computer storage medium. The computer storage medium stores a program. The program is executed to perform some or all of the steps recorded in the method embodiments.

The following describes another communication apparatus according to an embodiment of this application. Refer to FIG. 4. A communication apparatus 400 includes:
a receiver 401, a transmitter 402, a processor 403, and a memory 404. In some embodiments of this application, the receiver 401, the transmitter 402, the processor 403, and the memory 404 may be connected through a bus or in another manner, and an example in which the bus is used for connection is described in FIG. 4.

The memory 404 may include a read-only memory and a random access memory, and provide instructions and data for the processor 403. A part of the memory 404 may further include a non-volatile random access memory (non-volatile random access memory, NVRAM). The memory 404 stores an operating system and an operation instruction, an executable module, or a data structure, or a subset thereof, or an extended set thereof. The operation instruction may include various operation instructions used to implement various operations. The operating system may include various system programs, to implement various basic services and process a hardware-based task.

The processor 403 controls an operation of the communication apparatus 400, and the processor 403 may also be referred to as a central processing unit (central processing unit, CPU). In a specific application, components of the communication apparatus 400 are coupled together by using a bus system. In addition to a data bus, the bus system may include a power supply bus, a control bus, a status signal bus, and the like. However, for clear description, various types of buses in the figure are marked as the bus system.

The method described in embodiments of this application may be applied to the processor 403, or may be implemented by the processor 403. The processor 403 may be an integrated circuit chip and has a signal processing capability. In an implementation process, steps in the foregoing method may be implemented by using a hardware integrated logical circuit in the processor 403, or by using instructions in a form of software. The processor 403 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 404, and the processor 403 reads information in the memory 404 and completes the steps in the foregoing method in combination with hardware of the processor.

The receiver 401 may be configured to: receive input digit or character information, and generate a signal input related to a related setting and function control. The transmitter 402 may include a display device, for example, a display. The transmitter 402 may be configured to output digit or character information through an external interface.

In this embodiment of this application, the processor 403 is configured to perform the foregoing model training method.

In another possible design, when the model training device 300 or the communication apparatus 400 is a chip, the communication apparatus 400 includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the terminal performs the model training method according to any one of the possible implementations of the first aspect. Optionally, the storage unit is a storage unit in the chip, for example, a register or a cache. Alternatively, the storage unit may be a storage unit that is in the terminal and that is located outside the chip, for example, a read-only memory (read-only memory, ROM) or another type of static storage device that may store static information and instructions, for example, a random access memory (random access memory, RAM).

The processor mentioned anywhere above may be a general-purpose central processing unit, a microprocessor, an ASIC, or one or more integrated circuits configured to control program execution of the methods.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or a part of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the process or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

## Claims

1. A model training method, comprising:
obtaining a target model, wherein the target model is a neural network with a plurality of feature transformation layers, and each of the plurality of feature transformation layers corresponds to one weight matrix;
performing sampling on the target model to obtain a submodel of the target model, wherein a quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model;
training the submodel to obtain a trained submodel;
augmenting the trained submodel to obtain an augmented model, wherein a quantity of layers of the augmented model is greater than a quantity of layers of the trained submodel, and/or a weight matrix of at least one of a plurality of feature transformation layers of the augmented model is obtained by augmenting a weight matrix of a corresponding feature transformation layer of the trained submodel; and
training the augmented model to obtain a trained augmented model.

2. The method according to claim 1, wherein after the training the augmented model to obtain a trained augmented model, the method further comprises:
S1. setting i=1, wherein the trained augmented model is a model i;
S2. if a quantity of feature transformation layers of the model i is not greater than the quantity of feature transformation layers of the target model, and/or a size of a weight matrix of at least one of a plurality of feature transformation layers of the model i is less than a size of a weight matrix of a corresponding feature transformation layer of the target model, augmenting the model i to obtain an augmented model i, wherein the quantity of layers of the augmented model is greater than that of the model i, and/or a weight matrix of at least one of feature transformation layers of the augmented model is obtained by augmenting a weight matrix of a corresponding feature transformation layer of the model i; and
S3. training the augmented model i to obtain a model i+1, setting i=i+1, and performing step S2.

3. The method according to claim 2, wherein the method further comprises:
if the quantity of feature transformation layers of the model i is equal to the quantity of feature transformation layers of the target model, and a size of a weight matrix of each of the plurality of feature transformation layers of the model i is equal to a size of a weight matrix of a corresponding feature transformation layer of the target model, deploying the model i+1 in a target device.

4. The method according to any one of claims 1 to 3, wherein when a weight matrix j corresponding to a j^{th} feature transformation layer of the augmented model is a weight submatrix of a corresponding feature transformation layer of the trained submodel, at least one row of augmented weight vectors and/or at least one column of augmented weight vectors are augmented.

5. The method according to claim 4, wherein the at least one row of augmented weight vectors are orthogonal to at least one row of weight vectors of the weight matrix j respectively, and/or the at least one column of augmented weight vectors are orthogonal to at least one column of weight vectors of the weight matrix j respectively.

6. The method according to any one of claims 1 to 5, wherein the performing sampling on the target model to obtain a submodel of the target model comprises:
selecting one or more feature transformation layers from the plurality of feature transformation layers of the target model, to obtain the submodel of the target model, wherein a probability that any feature transformation layer of the submodel of the target model is selected is a first probability; and
the augmenting the trained submodel to obtain an augmented model comprises:
selecting one or more feature transformation layers from the target model, to obtain the augmented model, wherein a probability that any feature transformation layer of the augmented model is selected is a second probability, and the second probability is higher than the first probability.

7. A model training device, comprising:
a transceiver module, configured to obtain a target model, wherein the target model is a neural network with a plurality of feature transformation layers, and each of the plurality of feature transformation layers corresponds to one weight matrix; and
a processing module, configured to perform sampling on the target model to obtain a submodel of the target model, wherein a quantity of feature transformation layers of the submodel is less than a quantity of feature transformation layers of the target model, and/or a size of a weight matrix of at least one of feature transformation layers of the submodel is less than a size of a weight matrix of a corresponding feature transformation layer of the target model;
the processing module is further configured to train the submodel to obtain a trained submodel;
the processing module is further configured to augment the trained submodel to obtain an augmented model, wherein a quantity of layers of the augmented model is greater than a quantity of layers of the trained submodel, and/or a weight matrix of at least one of a plurality of feature transformation layers of the augmented model is obtained by augmenting a weight matrix of a corresponding feature transformation layer of the trained submodel; and
the processing module is further configured to train the augmented model to obtain a trained augmented model.

8. The model training device according to claim 7, wherein the processing module is further configured to:
S1. set i=1, wherein the trained augmented model is a model i;
S2. if a quantity of feature transformation layers of the model i is not greater than the quantity of feature transformation layers of the target model, and/or a size of a weight matrix of at least one of a plurality of feature transformation layers of the model i is less than a size of a weight matrix of a corresponding feature transformation layer of the target model, augment the model i to obtain an augmented model i, wherein the quantity of layers of the augmented model is greater than that of the model i, and/or a weight matrix of at least one of feature transformation layers of the augmented model is obtained by augmenting a weight matrix of a corresponding feature transformation layer of the model i; and
S3. train the augmented model i to obtain a model i+1, set i=i+1, and perform step S2.

9. The model training device according to claim 8, wherein the processing module is further configured to:
if the quantity of feature transformation layers of the model i is equal to the quantity of feature transformation layers of the target model, and a size of a weight matrix of each of the plurality of feature transformation layers of the model i is equal to a size of a weight matrix of a corresponding feature transformation layer of the target model, deploy the model i+1 in a target device.

10. The model training device according to any one of claims 7 to 9, wherein when a weight matrix j corresponding to a j^{th} feature transformation layer of the augmented model is a weight submatrix of a corresponding feature transformation layer of the trained submodel, at least one row of augmented weight vectors and/or at least one column of augmented weight vectors are augmented.

11. The model training device according to claim 10, wherein the at least one row of augmented weight vectors are orthogonal to at least one row of weight vectors of the weight matrix j respectively, and/or the at least one column of augmented weight vectors are orthogonal to at least one column of weight vectors of the weight matrix j respectively.

12. The model training device according to any one of claims 7 to 11, wherein the processing module is specifically configured to:
select one or more feature transformation layers from the plurality of feature transformation layers of the target model, to obtain the submodel of the target model, wherein a probability that any feature transformation layer of the submodel of the target model is selected is a first probability; and
select one or more feature transformation layers from the target model, to obtain the augmented model, wherein a probability that any feature transformation layer of the augmented model is selected is a second probability, and the second probability is higher than the first probability.

13. A computer-readable storage medium, wherein the computer-readable storage medium stores a program, and the program enables a computer device to perform the method according to any one of claims 1 to 6.

14. A computer program product, wherein the computer program product comprises computer-executable instructions, the computer-executable instructions are stored in a computer-readable storage medium, at least one processor of a device reads the computer-executable instructions from the computer-readable storage medium, and the at least one processor performs the computer-executable instructions to enable the device to perform the method according to any one of claims 1 to 6.

15. A communication apparatus, wherein the communication apparatus comprises at least one processor, a memory, and a communication interface, wherein
the at least one processor is coupled to the memory and the communication interface;
the memory is configured to store instructions, the processor is configured to execute the instructions, and the communication interface is configured to communicate with another communication apparatus under control of the at least one processor; and
when the instructions are executed by the at least one processor, the at least one processor is enabled to perform the method according to any one of claims 1 to 6.

16. A chip system, wherein the chip system comprises a processor and a memory, the memory and the processor are interconnected through a line, the memory stores instructions, and the processor is configured to perform the method according to any one of claims 1 to 6.
